(19) **Europäisches Patentamt**

**European Patent Office**

**Office européen des brevets**

(11) **EP 1 278 913 B1**

(12) **EUROPEAN PATENT SPECIFICATION**

(45) Date of publication and mention
of the grant of the patent:
**02.11.2005 Bulletin 2005/44**

(51) Int Cl.⁷: $D21H \ 21/20$, $C08B \ 15/00$,
$C08B \ 31/00$
// $(D21H17/25, \ 17:28)$

(21) Application number: **01928253.2**

(22) Date of filing: **04.05.2001**

(86) International application number:
**PCT/NL2001/000343**

(87) International publication number:
**WO 2001/083887 (08.11.2001 Gazette 2001/45)**

(54) **ALDEHYDE-CONTAINING POLYMERS AS WET STRENGTH ADDITIVES**

ADEHYDE ENTHALTENDE POLYMERE ALS NASSFESTMITTEL

POLYMERES CONTENANT DES ALDEHYDES UTILISES COMME AGENTS DE RESISTANCE HUMIDE

(84) Designated Contracting States:
**AT BE CH CY DE DK ES FI FR GB GR IE IT LI LU MC NL PT SE TR**

(30) Priority: **04.05.2000 EP 00201630**
**11.05.2000 EP 00201693**

(43) Date of publication of application:
**29.01.2003 Bulletin 2003/05**

(73) Proprietor: **SCA Hygiene Products Zeist B.V.**
**3700 AJ Zeist (NL)**

(72) Inventors:
• **THORNTON, Jeffrey, Wilson**
**NL-1272 AC Huizen (NL)**

• **VAN BRUSSEL-VERRAEST, Dorine, Lisa**
**NL-2411 WG Bodegraven (NL)**
• **BESEMER, Arie**
**NL-3958 CE Amerongen (NL)**
• **SANDBERG, Sussan**
**S-439 35 Onsala (SE)**

(74) Representative: **van Westenbrugge, Andries et al**
**Nederlandsch Octrooibureau**
**P.O. Box 29720**
**2502 LS The Hague (NL)**

(56) References cited:
**EP-A- 0 232 851**      **EP-A- 0 283 951**
**WO-A-00/11046**      **US-A- 4 675 394**
**US-A- 5 958 187**

**Description**

The present invention relates to the use of multifunctional aldehyde-containing polymers as temporary wet strength agents for paper and tissue applications, as well as nonwovens.

Wet strength is an important characteristic of paper and tissue products, and in non-woven products. Wet strength of such products can be increased by using wet strength additives. The most widely used wet strength additives for the paper industry are melamine-formaldehyde and urea-formaldehyde. There is a tendency, however, to move away from such oil-based chemicals, because they are not renewable and have a poor biodegradability. Carboxymethyl cellulose (CMC) is currently used in combination with PAE (polyaminoamide epichlorohydrin) as a wet strength agent (see Espy, TAPPI Journal, 78, 90 (1995)). However, CMC is also partly dependent on oil-based materials (monochloroacetic acid) and, moreover, is a rather expensive material.

Oxidised celluloses have the advantage of being accessible from renewable raw materials only and possibly of being less expensive than CMC, while they may have comparable properties to CMC. However, the oxidation of cellulose is hampered by the poor solubility of cellulose, making it insufficiently accessible to oxidising agents.

Aldehyde functions have been recognised as being useful in binding cellulose fibers, to improve wet strength of the fibers. Thus, dialdehyde starch (TAPPI, 57, 81 (1974); and TAPPI 45, 750 (1962)) and dialdehyde guar and the like (WO 97/36054) have been proposed as paper wet strength additives. US 3,087,852 and US 4,001,032 disclose cationic dialdehyde starch, obtained by reacting dialdehyde starch with betaine hydrazide, to be used as a paper strengthening additive.

US 5,935,383 discloses the use of anionic compounds, such as sulphato-ethyl-amino-halotriazines, for providing the cellulose surface with additional anionic sites suitable for retaining a high proportion of cationic wet strength additives such as PAE resin on the cellulose.

WO 99/23117 and WO 99/23240 describe the oxidation of cellulose and starch, respectively, with TEMPO and an oxidative enzyme (laccase) and oxygen at pH 4-9 resulting in products containing low levels of carbaldehyde and carboxyl groups.

US 3,553,193 describes the oxidation of starch with bromite or hypobromite, which results in varying levels of carbonyl (ketonic) and carboxyl groups depending on the oxidation conditions, with a carbonyl/carboxyl ratio of between 2:1 and 8:1. The oxidation products are stated to be suitable as paper strength additives. The oxidation of starch with sodium hypochlorite is believed first to yield keto groups. In a later stage of oxidation aldehyde groups may be formed. The mechanism postulated by Whistler (J. Am. Chem. Soc., 79, 6460 (1957), see also PhD thesis of Floor, Delft University of Technology, 1989) however states that a diketo group is formed, which decomposes with OH- and is oxidised. One has to assume that hypobromite reacts in an analogous way. A recent publication of Deary and Davies in Carbohydr. Research 309, 17-29 (1998) reviews the bromine oxidation and confirms that keto groups are the primary products from bromine oxidation. From their experiments with $\alpha$-cyclodextrins they conclude also that the keto product is formed. They present no evidence for the formation of aldehydes. Also, Tomeport et al (Starch 42 , 413-417 (1990)) and Salomonsson et al (Carbohydrate Res. 217 (1991)) state that oxidation of starch with bromine species ($Br_2$:CH = 1/40 to 1/1) at pH 7 results in keto groups and carboxylic acids. It is known that higher pH's lead to higher carboxylate contents.

WO 00/11046 describes dialdehyde-modified anionic and amphoteric polyacrylamides for improving strength of paper.

It was found that multifunctional biopolymers, having both aldehyde functions and carboxylic acid and/or other anionic functions, the ratio between aldehyde functions and anionic functions (hereafter referred to as A/C ratio) being at least 0.75:1, preferably at least 2:1, up to about 15:1, preferably up to 10:1, are very useful as wet strength additives.

These polymers are excellent substitutes for known wet strength agents such as carboxymethyl cellulose (CMC) and dialdehyde starch because of their better ecological acceptability (degradability) and their improved water-solubility and thus better accessibility to further reagents, and an improved functionality.

Suitable biopolymers include (modified) peptides and proteins, proteoglycans and in particular polysaccharide-types of polymer. Examples of polysaccharides include $\alpha$-1,4--glucans (the "starch family", including amylose, amylopectin, dextrins and cyclodextrins), $\alpha$-1,6-glucans (dextran) and mixed $\alpha$-glucans such as pullulan, $\beta$-1,4-glucans (cellulose), $\beta$-1,3-glucans such as scleroglucan and curdlan, xyloglucans, glucomannans and galacto-mannans (guar and locust bean gum), other gums including heterogeneous gums like xanthan, ghatti, carrageenans, alginates, pectin, (arabino)xylans (hemicellulose), $\beta$-2,1- and $\beta$-2,6-fructans (inulin and levan), etc. The biopolymers may also be synthetically modified. The simultaneous presence of aldehyde and anionic, such as carboxyl (-$CO_2H$), sulpho (-$SO_3H$) and phosphono (-$PO_3H_2$) groups, can be achieved by various methods. These methods comprise:

(1) introduction of anionic groups by addition, followed by introduction of aldehyde functions, e.g. by oxidation; here, the anionic groups such as carboxyl groups or other acid groups may be introduced e.g. by carboxyalkylation, sulphatation, sulpho-alkylation, phosphatation, or the like, or they may be present in polymers which already have added acid groups by biosynthesis such as sulphate groups in carrageenans; the aldehyde functions can be introduced e.g. by oxidation of 1,2-dihydroxyethylene groups (such as those at the 2,3-position of 1,4-linked or 1,6-linked glucans) using periodate-type oxidising agents, or by partial oxidation of hydroxymethyl groups (such as those at the 6-position of 1,4-linked or 1,3-linked glucans) using nitric oxide (NOx) types of oxidising agents;

(2) introduction of carboxyl groups by oxidation of hydroxymethyl groups followed by introduction of aldehyde functions by oxidation as under (1); here, the carboxyl (anionic) groups are introduced by oxidation of the hydroxymethyl groups, such as those at the 6-position of 1,4-linked or 1,3-linked glucans, using NOx-type of oxidising agents, or they may be present in polymers already containing 6-carboxyl groups by biosynthesis, if necessary after hydrolysis of ester groups, such as pectins, xanthans and alginates; the aldehyde groups can again be introduced e.g. by oxidation of 1,2-dihydroxyethylene groups, or by partial oxidation of further hydroxymethyl groups;

(3) controlled oxidation of hydroxymethyl groups (such as those at the 6-position of 1,4-linked or 1,3-linked glucans) so as to partly convert them to aldehyde functions and to convert only a (minor) part of the aldehyde functions so obtained to carboxyl functions;

(4) introduction of aldehyde groups, e.g. by oxidation of 1,2-dihydroxyethylene groups (such as those at the 2,3-position of 1,4-linked or 1,6-linked glucans) using periodate-type oxidising agents, followed by partial further oxidation thereof to carboxyl groups using different oxidising agents such chlorite or bromine;

(5) introduction of (protected) aldehyde groups (e.g. furan acetals) by etherification, e.g. as described in US 4,731,162 and US 4,741,804, followed by introduction of carboxymethyl groups.

Further combinations of partial reaction steps as described above are also contemplated.

The individual reaction steps referred to above are known in the art. Carboxymethylation of polysaccharides is also widely used in the art, and is commonly performed using sodium monochloroacetate in alkaline medium or by hydroxyalkylation (e.g. with ethylene oxide) followed by catalytic oxidation. Other carboxyalkylation, such as carboxyethylation, can be accomplished by base-catalysed addition of acrylamide followed by hydrolysis, or by addition of succinic or maleic or other anhydride, etc. Sulphate and sulpho groups can be introduced by reaction with sulphuric acid derivatives such as chlorosulphonic acid or with vinylsulphonic acid or taurine analogues. Phosphorylation can be achieved by reaction with phosphoric acid or its derivatives or with haloalkyl-phosphonic acids.

Also, oxidation of 1,2-dihydroxyethylene groups in the recurring units of polysaccharides is extensively known, and can be performed with periodate or similar polyoxy-anions, resulting in C-C bond scission according to the equation:

$$-CHOH-CHOH- \rightarrow -CH=O + O=CH-$$

and thus to opening of the cyclic anhydromonosaccharide unit. These products are usually referred to as "dialdehyde carbohydrates" such as dialdehyde starch (DAS) and dialdehyde inulin (DAI).

The partial further oxidation of these dialdehyde carbohydrates can be accomplished, e.g. with sodium chlorite with or without hydrogen peroxide, the molar amount of chlorite, with respect to the dialdehyde product, determining the carboxyl content of the final product.

A particularly advantageous method of further oxidising dialdehyde carbohydrates in a partial and controlled manner is described in PCT/NL99/00673 (WO00/26257, published 11 May 2000) and proceeds by reacting the dialdehyde product with a catalytic amount of halogen, such as chlorine, iodine and especially bromine. Halogen is regenerated in situ by oxidation with an oxidising agent. Sodium hypochlorite can be used for the (re)generation of the molecular halogen, but preference is given to peracids. The catalytic amount of molecular halogen may be 0.2-40, preferably from 1 to 10 mole%, with respect to the amount of peracid. The peracid may be any peralkanoic acid such as peracetic acid, perpropionic acid, perlauric acid etc., a substituted peralkanoic acid such as peroxy-trifluoroacetic acid, an optionally substituted aromatic peracid such as perbenzoic acid or m-chloroperbenzoic acid, or an inorganic peracid such as perboric or persulphuric acid. The molar amount of oxidising agent (e.g. peracid) with respect to the dialdehyde product, determines the carboxyl content of the final product.

This method, besides reducing the amount of halide produced, is also beneficial to the properties of the partially oxidised products, in particular as to a more regular distribution of carboxyl and aldehyde groups. In addition, this method is cheaper than the oxidation with sodium chlorite in the presence of hydrogen peroxide and produces less halide waste.

The selective oxidation of hydroxymethyl groups (i.e. primary hydroxyl functions) to aldehyde and/or carboxyl functions has been known for several years. Nitric oxides, i.e. nitrogen dioxide and dinitrogen tetroxide or nitrite/nitrate are known in the art as suitable oxidising agents for these oxidations, as described e.g. in US Patent 3,364,200 and NL patent application 93.01172 and by Painter, Carbohydrate Research 55, 950193 (1977) and ibid. 140, 61-68 (1985). This oxidation may be performed in an apolar, e.g. halogenated, solvent, or in an aqueous solvents, such as phosphoric acid.

A preferred reagent for the selective oxidation of hydroxymethyl groups is constituted by nitroxyl compounds, such as TEMPO (2,2,6,6-tetramethyl-piperidine-N-oxide) and related compounds such as 2,2,5,5-tetramethylpyrrolidine-N-oxyl, 2,2,5,5-tetramethylimidazoline-N-oxyl, and 4-hydroxy TEMPO and derivatives thereof such as the 4-phosphonooxy, 4-acetoxy, 4-benzoyloxy, 4-oxo, 4-amino, 4-acetamino, 4-maleimido, 4-isothiocyanato, 4-cyano and 4-carboxy TEMPO. TEMPO is used in these reactions as a catalyst (e.g. using 0.1-25 mol% with respect to final oxidising agent) in the presence of a final oxidising agent such as hypochlorite or hydrogen peroxide. TEMPO oxidation has been described e.g. in WO 95/07303. Further intermediate oxidants such as metal complexes (see PCT/NL00/00118 = WO 00/50388), enzymes such as laccase or peroxidases (see WO 99/23240 and WO 99/23117 and PGT/NL00/00117 = WO 00/50621) can be used. Examples of metal complexes are complexes of a transition metal such as manganese, iron, cobalt, nickel, copper, vanadium or ruthenium, with a complexing agent, especially nitrogen-containing compound such as a bipyridyl, a trimethyl-triazonane or other poly(tertiary amine) or a (poly)histidine; such metal complexes can be used in an amount of 1-25 mol% with respect to the number a aldehyde or carboxyl groups desired. The actual oxidising species in the TEMPO-mediated oxidations is believed to be the nitrosonium ion. The A/C ratio can be controlled by selecting appropriate conditions: aldehyde formation is favoured at low temperatures (0-20 °C) and at relatively low pH (3-7) and by controlled addition and/or low levels of oxidising agent.

The anionic groups in the products thus obtained may be free carboxyl, sulpho or phosphono groups (acid form) or may be in the salt form, e.g. with sodium, potassium, ammonium or substituted ammonium as the counter cation. The aldehyde- and acid-containing products have at least 5 aldehyde groups, especially at least 10 aldehyde groups, and at least 1 anionic group, especially at least 3 anionic groups, such as carboxyl groups, per molecule, also depending on the molecular weight (degree of polymerisation, DP). Thus, for smaller molecules, e.g. having a molecular weight below 3,000, the number of aldehyde groups per molecule may be lower, e.g. at least one per 600 Da, with a minimum of 2. The degree of substitution (DS) for aldehyde groups is preferably between 5 and 98 % of the maximum value, more preferably between 25 and 75%. As the maximum number of aldehyde groups in most oxidised polysaccharides is 3 per recurring (monosaccharide) unit, the DS expressed in number of substituent groups per recurring unit is at least 0.10, preferably between 0.15 and 2.95, more preferably between 0.25 and 2.25). The DS for anionic groups, especially carboxylic groups, is preferably between 0.03 and 1.0, more preferably between 0.05 and 0.4 per recurring unit.

If desired for the purpose of enhancing wet strength, the multifunctional product can be further chemically modified. A particularly suitable derivative is a product also containing cationic groups. Such cationic groups can be introduced by reacting a part of the aldehyde groups with an amine, hydrazine, hydrazide or the like, optionally under reductive conditions, or by reacting, at some stage during the production, saccharidic hydroxyl groups with ammonium-containing reagents such as timethylaminonio-alkyl halides or epoxides. These multifunctional cationic compounds contain at least 0.01 up to about 0.50 cationic groups per recurring unit, preferably from 0.02 to 0.25 cationic groups per recurring unit; they are also part of the invention.

Alternatively, the aldehyde-anionic polymers can be combined with separate cationic compounds such as, for example, cationic polysaccharides, in particular cationic DAS, or with other conventional cationic wet strength agents such as PEI (polyethyleneimine) or PAE, to produce a composite wet-strength agent. The weight ratio between the aldehyde/anionic polymer and the cationic compound can be e.g. from 90:10 to 10:90, especially from 75:25 to 15:85. Such composite wet strength agents are a distinct embodiment of the invention.

The aldehyde-containing anionic polymers can be combined, usually as aqueous solutions or dispersions with cellulosic fibres in a manner known for the application of wet strength agents. The amount of agent is preferably between 0.1 and 4 % by weight, especially between 0.2 and 2 % by weight, with respect to the cellulosic fibre. If desired, cationic wet strength agents can be applied subsequently followed by drying the fibre web. Addition of a cationic polymer is usually necessary for multifunctional derivatives that do not themselves contain cationic groups, because otherwise there would insufficient absorption of the derivative to the fibre. Further alternate layering with aldehyde-containing anionic polymer and cationic polymer can also be advantageous.

**Examples**

*Abbreviations:*

6-AS: 6-aldehyde starch
DAS: dialdehyde starch
MACC: monoaldehyde-carboxy cellulose
MACS: monoaldehyde-carboxy starch
PAE: polyamide-amide epichlorohydrin

PCD: particle charge determination
PEI: polyethyleneimine

**Example 1**

*a) Preparation of MACS with peracetic acid/bromide to different degrees of oxidation*

Dialdehyde starch (oxidation degree 100%) was prepared by adding 6.6 g sodium periodate (31 mmole) to a slurry of 5.0 g (dry weight) starch (31 mmole) in 100 ml water which was brought to pH 5 with diluted acetic acid and cooled to 4°C. The mixture was stirred for 24 hours at 4°C in the absence of light. The obtained product was isolated by filtration and washed with water until iodate could no longer be detected by reaction with potassium iodide.
To obtain MACS, the dialdehyde starch was reslurried in 100 ml water and part of the aldehydes were further oxidised to carboxylates. To achieve this, sodium bromide (0.5 g) was added and then peracetic acid (0.6 M) was added portionwise (see Table 1). The pH was kept constant at pH 5 using 0.5 M NaOH (pH-stat.). After reaction, the aldehyde carboxy starch was purified by membrane filtration (molecular cut-off 5000 MW) and freeze-dried.

Table 1:

| Conversion of DAS to MACS | | |
|---|---|---|
| Sample | Totally added peracetic acid solution (ml of 0.6 M solution) | % aldehydes oxidised to carboxylates |
| A5 | 5 | 5 |
| A10 | 10 | 10 |
| A30 | 31 | 30 |
| A50 | 52 | 50 |

*b) Application as wet strength additive*

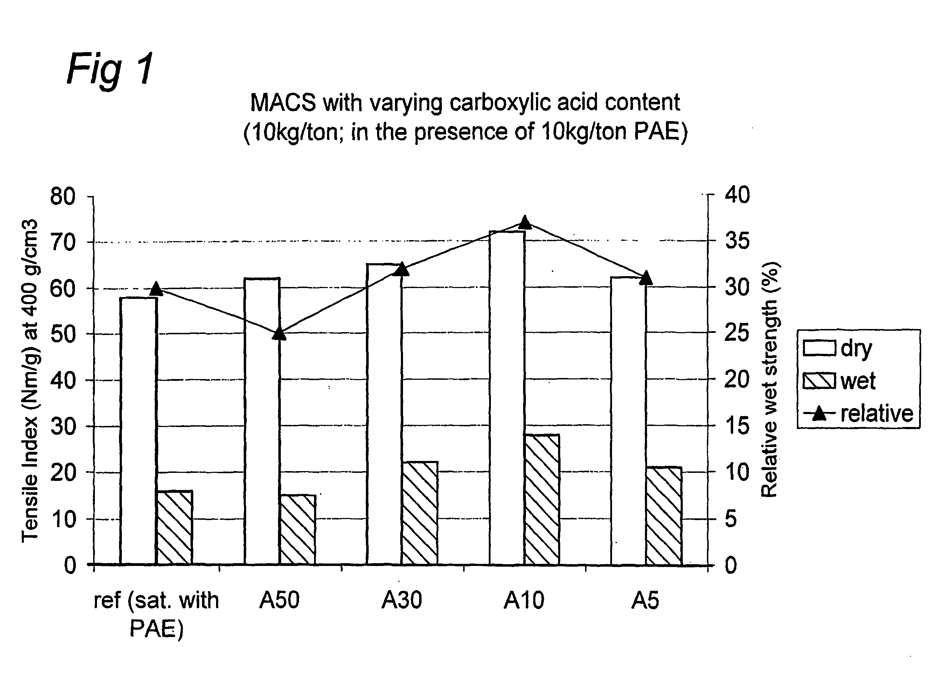

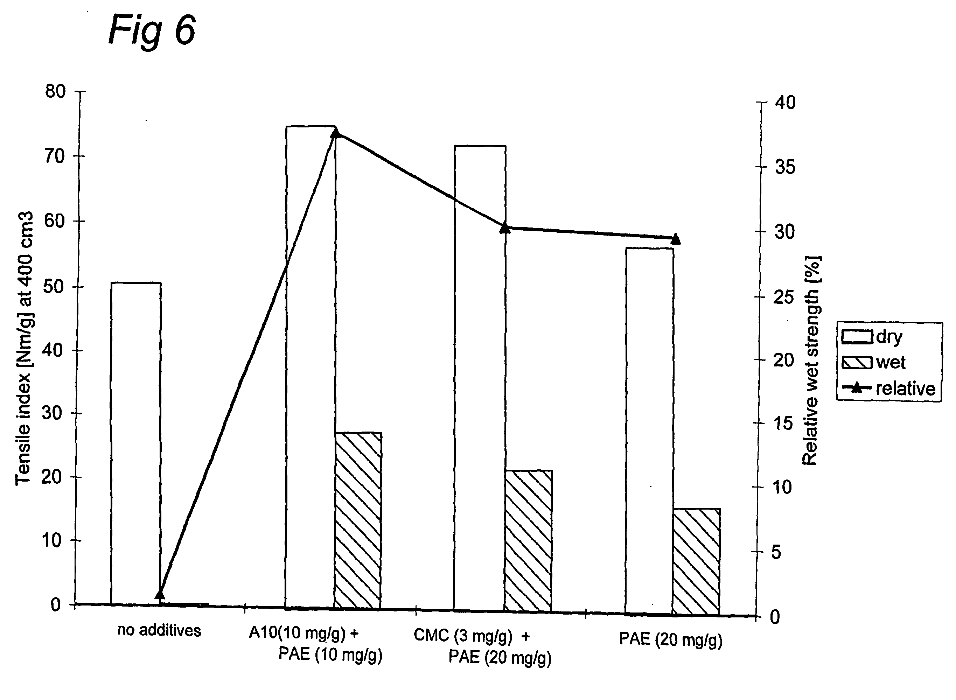

The addition levels were 10 mg/g MACS and 10 mg/g PAE.
Sheets were prepared as in example 8. The results are presented in Figure 1.
The highest relative wet strength was obtained in the sheets treated with MACS with an oxidation degree of 10% and PAE. The performance of this combination is better than the combination of CMC and PAE, which is commonly used nowadays. It may be noted that when no additives are used, essentially no wet strength is obtained (compare Figure 6).

**Example 2**

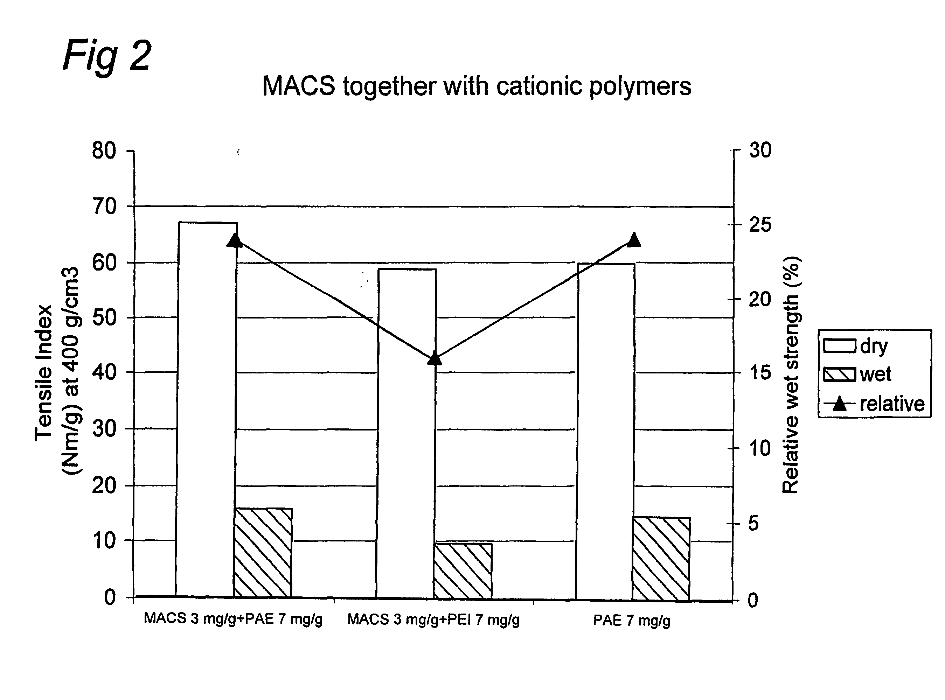

MACS with an oxidation degree of 50% was prepared as described in Example 1. This polymer was added to pulp together with PEI (3mg/g and 7mg/g, respectively).
Sheets were prepared as in example 8. The results are presented in Figure 2. It may be noted that PEI does not give wet strength by itself (like PAE does). The wet strength shown in the case of MACS + PEI can be completely ascribed to MACS.

**Example 3**

*a) Preparation of MACS with chlorite/hydrogen peroxide to different degrees of oxidation*

Dialdehyde starch (oxidation degree 100%) was prepared as described in example 1.
To obtain MACS, 5 g of the dialdehyde starch (30 mmole AGU) was reslurried in 100 ml water and cooled to 4°C. In order to oxidise part of the aldehydes to carboxylates, hydrogen peroxide (640 μl of a 30 % solution, 6 mmole) and 700 mg sodium chlorite (80% grade, 7.5 mmole) were added (see Table 2). The pH was kept constant at pH 5 using 0.5 M NaOH (pH stat.). After reaction, the aldehyde carboxy starch was purified by filtration and washing with water and the product was subsequently freeze-dried.

Table 2:

| Conversion of DAS to MACS | | | |
|---|---|---|---|
| Sample | Added hydrogen peroxide solution (30%) (µl) | Added sodium chlorite (80%) (mg) | % aldehydes oxidised to carboxylates |
| Ac5 | 320 | 350 | 5 |
| Ac10 | 640 | 700 | 10 |
| Ac15 | 960 | 1050 | 15 |

*b) Application as wet strength additive*

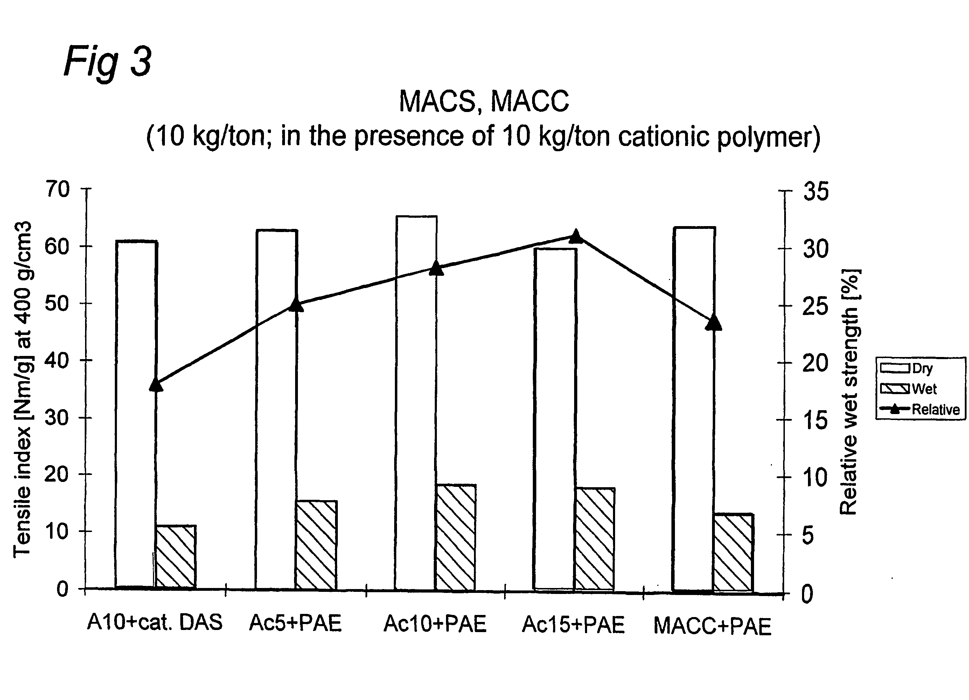

Sheets were prepared as in example 8.
The addition levels were 10 mg/g MACS and 10 mg/g PAE. The results are presented in Figure 3.

**Example 4**

Dialdehyde cellulose (oxidation degree 100%) was prepared by adding 6.6 g sodium periodate (31 mmole) to a slurry of 5.0 g (dry weight) cellulose (31 mmole) in 100 ml water which was brought to pH 5 with diluted acetic acid and cooled to 4°C. The mixture was stirred for 1 week at 4°C in the absence of light. The obtained product was isolated by filtration and washed with water until iodate could no longer be detected by reaction with potassium iodide.
To obtain MACC, the dialdehyde cellulose was reslurried in 100 ml water and half of the aldehydes were further oxidised to carboxylates. To achieve this, sodium bromide (0.5 g) was added and then peracetic acid (0.6 M) was added portion-wise (52 ml of a 0.6 M solution). The pH was kept constant at pH 5 using 0.5 M NaOH (pH-stat.). After reaction, the aldehyde carboxy cellulose was purified by membrane filtration (molecular cut-off 5000 MW) and freeze-dried.
Sheets were prepared as in example 8. The results are presented in Figure 3.

**Example 5**

MACS with an oxidation degree of 10 % was prepared as described in example 1. This material was added to pulp (10 mg/g) together with cationic dialdehyde starch (10 mg/g).
Sheets were prepared as in example 8. The results are presented in Figure 3.

**Example 6**

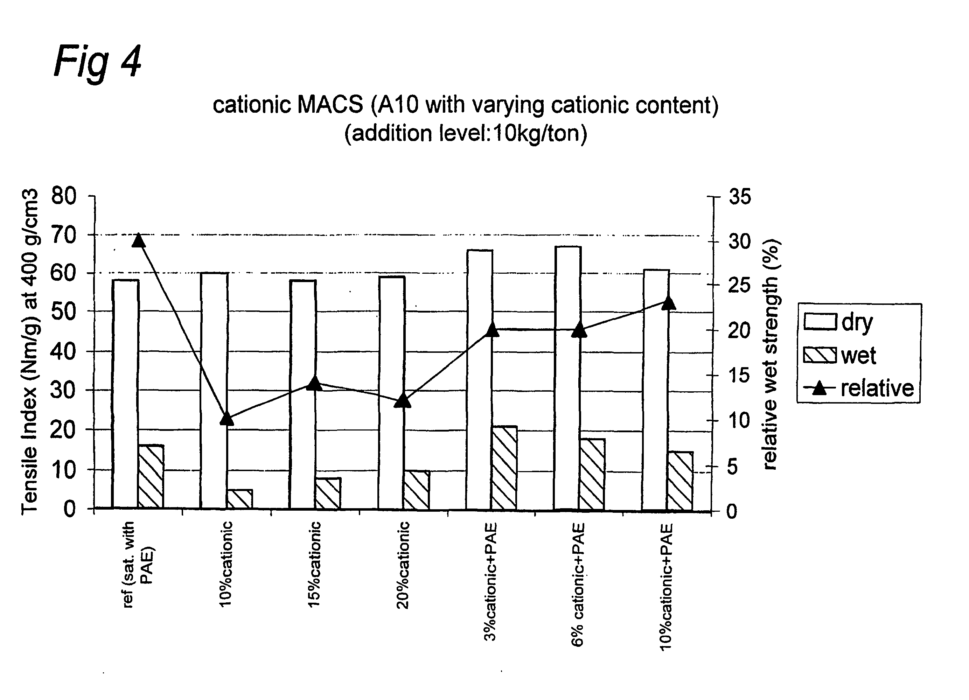

MACS with an oxidation degree of 10 % was prepared as described in example 1. 1 g of this material was suspended in water and Girard's reagent ($NH_2NHCOCH_2N^+(CH_3)_3$, betaine hydrazide, 100 mg for 10% cationisation) was added. The solution was stirred for 2 hours at 40°C and was subsequently freeze dried. A cationic MACS derivative was obtained. This sample was added to pulp (addition level 10 mg/g), and sheets were prepared as in example 8. The cationic MACS derivative adsorbs onto the fibres and gives wet strength. When added together with PAE (10 mg/g), the performance increased with lowering of the content of cationic groups (see Figure 4).

**Example 7**

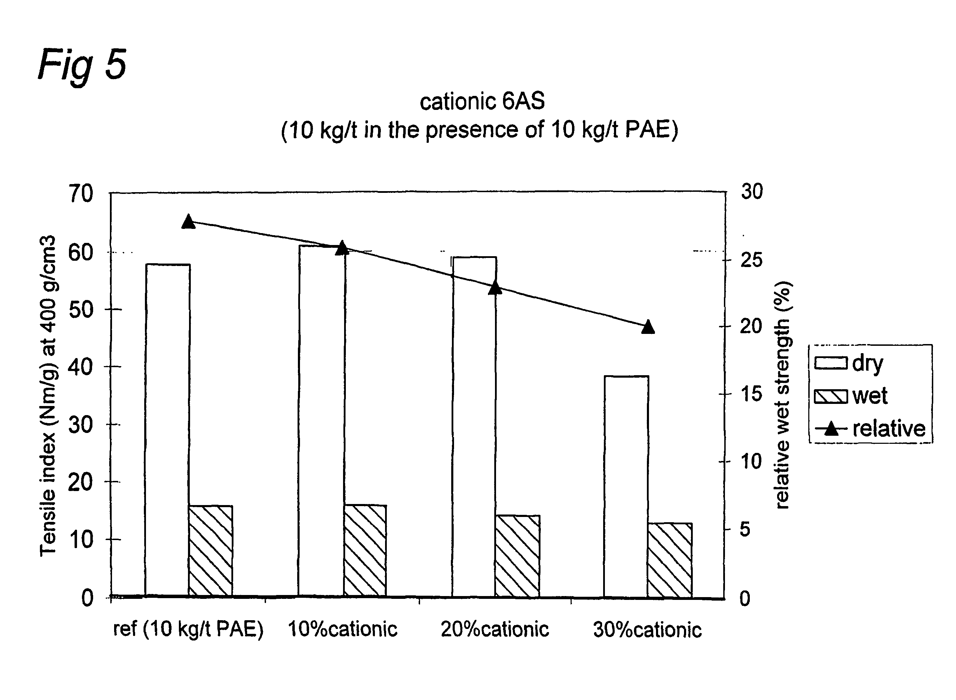

6-Aldehyde starch was prepared by a TEMPO-mediated oxidation of starch. 5.0 g (dry weight) starch (31 mmol) was gelatinised in 250 ml water. TEMPO (65 mg) and horseradish peroxidase (100 mg) were added. The pH of the solution was adjusted to 5.0 using diluted acetic acid. Hydrogen peroxide (3.75 ml of a 30 % solution, 33 mmole) was diluted to a volume of 125 ml and was added gradually at a rate of 5 ml/hour. The reaction time was 25 hours at room temperature. Adjustment of the pH during reaction was not necessary. The product was purified by membrane filtration (molecular cut-off 5000 MW) and freeze-dried.
1 g of this material was redissolved in water and Girard's reagent (100 mg for 10% cationisation) was added. The solution was stirred for 2 hours at 40°C and was subsequently freeze dried again. A cationic 6-aldehyde starch was obtained. This sample was added to pulp (addition level 10 mg/g) together with PAE (10 mg/g). Sheets were prepared as in example 8. The results are shown in Figure 5.

### Example 8

*Sheet making with derivatives of the invention*

*1. Refining*
500-530 grams of Östrand TCF pulp is diluted to 12 litres and refined to 25 SR° by a Laboratory refiner R1L, Escher Wyss. The pulp, when refined, is about 40 g/L so it is diluted to the concentration of 3 g/L.

*2. Dynamic sheet former, Formette*
A wire of 0,4 m$^2$ is used and we want the Grammage to be 30 g/m$^2$.
The pulp is poured into the beater and the wet strength additive is added during stirring for 5 minutes. If PAE is added, it is added after five minutes and the pulp is stirred again for two minutes. Drum speed 1400 rotations/min, dewatering 30 sec.

*3. Press*
An absorbent paper is put over the sheet and the wire is taken off. Before pressing another absorbent paper is put over the sheet, so the sheet is between the two absorbent papers. The sheet is pressed at 0,5 bar once. To be able to compare sheets with each other, two sheets of the same composition are made but pressed at two different pressures, 0,5 bar and 5 bar. In this way we can compare them at the same density 400 g/cm$^3$.

*4. Drying*
The sheet is cut into four pieces and dried two and two with a fixed point for three minutes at a temperature of 140 °C.

*5. Cutting*
The sheet is cut into 15 mm strips for testing of dry and wet strength.
100*100mm is also cut out for measuring the thickness and Grammage.

*6. Conditioning*
The strips which wet strength is going to be tested are placed in a heating chamber, 105° C for 10 minutes. Then both the strips for wet and dry strength are placed in a climate room, temperature 23°C, moisture 50% for four hours.

*7. Grammage and thickness*
100*100 mm pieces of the sheet is used for measuring the Grammage and thickness.
Grammage is measured on a regular balance on 4 layers to get an average.
Thickness is also measured on four layers and on five different spots to get a good average.

*8. Tensile strength measurement*
The strength both wet and dry is measured in an Instron SCAN-P58:86.
Five 15-mm strips are measured to get an average.
When measuring the wet strength the strip is soaked for 15 sec in tap water.

### Example 9:

*Large-scale preparation of MACS and application in a full scale tissue paper machine*

The preparation of MACS with 15% of the aldehydes oxidised to carboxylic acids, as described in Example 1, was scaled up to 40 kg scale.
In the first step, 100% dialdehyde starch (DAS) was prepared. Sodium periodate (27 kg) was dissolved in 200 L water in a double-walled 300 L vessel equipped with a mechanical stirrer. The solution was cooled to 5°C. To this solution, potato starch (25 kg, 20.5 kg dry matter) was added portion-wise, keeping the temperature below 10°C. The slurry was stirred for 24 hours at 5°C. Then, the sodium iodate salts were removed by decantation after settling of the DAS. The granules were washed with deionised water until no sodium iodate could be detected with potassium iodide and sulphuric acid. This procedure was repeated once and one more time using 21 kg sodium periodate and 20 kg starch. The overall yield of dialdehyde starch was 47 kg of DAS (82 % of theory, due to some losses during the washing procedure).
In the second oxidation step, MACS was prepared. DAS (11.75 kg) was slurried in about 150 L deionised water in a 300 L double-walled vessel. Sodium bromide (1.41 kg) was added and subsequently peracetic acid (7.07 kg, 39% activity) was added slowly using a pump running at 20 mL/min. The pH maintained between 4.7 and 5.3 by a pH controller adding 4 M NaOH. The temperature was kept between 15°C and 20°C. After all chemicals were added, the solution was stirred overnight to ensure complete reaction. After reaction, the volume was reduced and part of the sodium acetate salts formed during reaction were removed using a membrane filtration unit (exclusion limit of 10000 D) to obtain a solution containing about 10 % MACS. This procedure was executed 4 times, and the products were mixed. The reaction yield of MACS in the second oxidation step was 42 kg (87 % of theoretical).

A solution (490 kg) containing 8.6 % MACS was obtained. The polymer obtained in this way had similar characteristics regarding molecular weight and charge density as the material described in Example 1.

A tissue paper containing MACS was produced at a paper machine. See Example 10.

**Example 10:** *Application in a full scale tissue paper machine*

With the MACS thus prepared (see Example 9), tissue paper was made on an industrial scale (continuous process) and the properties of the tissue were compared to those obtained with conventional wet strength agents.

Three kinds of tissues were made using the following composition of pulp: 65% TCF pulp (total chlorine free pulp) and 33% HTCTM pulp (high temperature chemi-thermomechanical pulp).

The first run was the reference, in which only PAE (9 kg/ton pulp) was applied. The second run was prepared using PAE (9 kg/ton pulp) and CMC, Hercobond C129 with a degree of substitution of 0.65-0.9, (1.7 kg/ton pulp). In the third run, PAE (9 kg/ton) and 1.7 kg MACS per ton were used. The results with regard to the dry strength, wet strength, and wet tensile index are summarised in Table 3.

Table 3.

| Wet and dry strength properties of tissue paper with PAE, PAE/CMC and PAE/MACS, respectively. | | | | |
|---|---|---|---|---|
| Run | Tissue samples | Dry strength (Nm/g) | Wet strength (Nm/g) | Tensile strength index (%) |
| 1 | PAE(ref.) | 8.9 | 2.5 | 28.1 |
| 2 | PAE/CMC | 11.6 | 3.2 | 27.3 |
| 3 | PAE/MACS | 10.8 | 3.2 | 29.6 |

As can be seen from Table 3, both MACS and CMC improve the properties of the tissue with regard to wet and dry strength and CMC and MACS exhibit the same properties.

**Claims**

1. Use of a water-soluble or water-dispersible aldehyde-containing anionic polymer as a wet strength additive in paper, tissue or non-woven products, ***characterised* in that** the polymer is a biopolymer selected from proteins, proteoglycans, polysaccharides and modifications thereof, having a molecular weight of at least 800, containing 0.25-2.25 aldehyde groups per recurring unit of the biopolymer and/or at least 5 aldehyde groups per molecule, the aldehyde groups being present as a result of oxidation of dihydroxyethylene and/or hydroxymethyl moieties of recurring monosaccharide units, and containing at least 1 anionic group per molecule, the ratio of aldehyde groups to anionic groups being higher than 0.75:1.

2. Use according to claim 1, in which the degree of substitution for aldehyde groups is 0.1-2.95 per recurring unit of the biopolymer, and the degree of substitution for anionic groups is 0.03-1.0 per recurring unit of the biopolymer.

3. Use according to claim 1, in which the degree of substitution for aldehyde groups is 0.25-2.25 per recurring unit of the biopolymer, and the degree of substitution for anionic groups is 0.05-0.4 per recurring unit of the biopolymer.

4. Use according to any one of claims 1-3, in which the anionic groups comprise carboxylic groups.

5. Use according to any one of claims 1-4, in which the biopolymer is a polysaccharide.

6. Use according to claim 5, in which the biopolymer is starch or cellulose or a starch- or cellulose-derived polymer.

7. Use according to claim 5 or 6, in which the aldehyde groups and the anionic groups are present as a result of oxidation of dihydroxyethylene moieties of recurring monosaccharide units.

8. Use according to claim 5 or 6, in which the aldehyde groups and the anionic groups are present as a result of oxidation of hydroxymethyl moieties of monosaccharide units.

9. Use according to any one of the preceding claims, in which anionic groups are present as a result of carboxymethylation.

10. Use according to any one of the preceding claims, in which the biopolymer further contains cationic groups with a degree of substitution of 0.01-0.50.

11. Polysaccharide derivative having a molecular weight of at least 800, containing 0.10-2.95 aldehyde groups, and 0.03-1.0 anionic groups and 0.01-0.50 cationic groups per recurring unit.

12. A wet strength composition containing 10-90% of a polysaccharide derivative containing 0.10-2.95 aldehyde groups, and 0.03-1.0 anionic groups per recurring unit, and 90-10% of a cationic polymer, the percentages being based on the total of carbohydrate derivative and cationic polymer.

13. A cellulosic fibre treated with a biopolymer as defined in any one of claims 1-11, or with a mixture according to claim 12.


**Patentansprüche**

1. Verwendung eines wasserlöslichen oder wasserdispergierbaren aldehydhaltigen anionischen Polymers als einem Nassfestmittel in Papier, feinem Gewebe oder Vliesprodukten, **dadurch gekennzeichnet, daß** das Polymer ein Biopolymer ist, das ausgewählt ist aus Proteinen, Proteoglycanen, Polysacchariden und Modifikationen derselben, mit einem Molekulargewicht von wenigstens 800, das 0,25-2,25 Aldehydgruppen pro Wiederholungseinheit des Biopolymers und/oder wenigstens 5 Aldehydgruppen pro Molekül enthält, wobei die Aldehydgruppen als ein Ergebnis der Oxidation von Dihydroxyethylen- und/oder Hydroxymethyl-Einheiten der Monosaccharid-Wiederholungseinheiten vorliegen, und das wenigstens 1 anionische Gruppe pro Molekül enthält, wobei das Verhältnis von Aldehydgruppen zu anionischen Gruppen höher als 0,75:1 ist.

2. Verwendung nach Anspruch 1, **dadurch gekennzeichnet, daß** der Substitutionsgrad für Aldehydgruppen 0,1-2,95 pro Wiederholungseinheit des Biopolymers beträgt und der Substitutionsgrad für anionische Gruppen 0,03-1,0 pro Wiederholungseinheit des Biopolymers beträgt.

3. Verwendung nach Anspruch 1, **dadurch gekennzeichnet, daß** der Substitutionsgrad für Aldehydgruppen 0,25-2,25 pro Wiederholungseinheit des Biopolymers beträgt und der Substitutionsgrad für anionische Gruppen 0,05-0,4 pro Wiederholungseinheit des Biopolymers beträgt.

4. Verwendung nach einem der Ansprüche 1 bis 3, **dadurch gekennzeichnet, daß** die anionischen Gruppen Carboxylgruppen umfassen.

5. Verwendung nach einem der Ansprüche 1 bis 4, **dadurch gekennzeichnet, daß** das Biopolymer ein Polysaccharid ist.

6. Verwendung nach Anspruch 5, **dadurch gekennzeichnet, daß** das Biopolymer Stärke oder Cellulose oder ein von Stärke oder Cellulose abgeleitetes Polymer ist.

7. Verwendung nach Anspruch 5 oder 6, **dadurch gekennzeichnet, daß** die Aldehydgruppen und die anionischen Gruppen als ein Ergebnis der Oxidation von Dihydroxyethylen-Einheiten von Monosaccharid-Wiederholungseinheiten vorliegen.

8. Verwendung nach Anspruch 5 oder 6, **dadurch gekennzeichnet, daß** die Aldehydgruppen und die anionischen Gruppen als ein Ergebnis der Oxidation von Hydroxymethyl-Einheiten von Monosaccharid-Einheiten vorliegen.

9. Verwendung nach einem der vorangehenden Ansprüche, **dadurch gekennzeichnet, daß** die anionischen Gruppen als ein Ergebnis einer Carboxymethylierung vorliegen.

10. Verwendung nach einem der vorangehenden Ansprüche, **dadurch gekennzeichnet, daß** das Biopolymer weiter kationische Gruppen mit einem Substitutionsgrad von 0,01-0,50 enthält.

11. Polysaccharid-Derivat mit einem Molekulargewicht von wenigstens 800, das 0,10-2,95 Aldehydgruppen und 0,03-1,0 anionische Gruppen und 0,01-0,50 kationische Gruppen pro Wiederholungseinheit enthält.

12. Nassfestzusammensetzung, die 10-90% eines Polysaccharid-Derivats enthält, das 0,10-2,95 Aldehydgruppen und 0,03-1,0 anionische Gruppen pro Wiederholungseinheit enthält, und 90-10% eines kationischen Polymers, wobei die Prozentanteile auf der Gesamtheit des Kohlehydrat-Derivats und kationischen Polymers beruhen.

13. Cellulosefaser, behandelt mit einem Biopolymer, wie definiert in einem der Ansprüche 1 bis 11, oder mit einer Mischung nach Anspruch 12.

**Revendications**

1. Utilisation d'un polymère anionique contenant un aldéhyde susceptible d'être dispersé ou solubilisé dans l'eau, comme additif pour conférer une résistance à l'humidité, aux papiers, aux tissus à jeter ou aux produits non-tissés, **caractérisée en ce que** le polymère est un biopolymère choisi dans le groupe comprenant les protéines, protéoglycanes, polysaccharides et leurs dérivés, présentant un poids moléculaire d'au moins 800, contenant de 0,25 à 2,25 groupements aldéhyde par unité récurrente de biopolymère et/ou au moins 5 groupements aldéhyde par molécule, les groupements aldéhyde présents résultant de l'oxydation de radicaux dihydroxyéthylène et/ou hydroxyméthyl provenant d'unités monosaccharide récurrentes, et contenant au moins un groupe anionique par molécule, le rapport groupements aldéhyde/groupes anioniques étant supérieur à 0,75/1.

2. Utilisation selon la revendication 1, **caractérisée en ce que** le taux de substitution des groupements aldéhyde est de 0,1 à 2,95 par unité récurrente de biopolymère et le taux de substitution des groupes anioniques est de 0,03 à 1,0 par unité récurrente de biopolymère.

3. Utilisation selon la revendication 1, **caractérisée en ce que en ce que** le taux de substitution des groupements aldéhyde est de 0,25 à 2,25 par unité récurrente de biopolymère et le taux de substitution des groupes anioniques est de 0,05 à ,40 par unité récurrentes de biopolymère.

4. Utilisation selon l'une quelconque des revendications 1 à 3, **caractérisée en ce que** les groupes anioniques comprennent des groupes carboxyliques.

5. Utilisation selon l'une quelconque des revendications 1 à 4, **caractérisée en ce que** le biopolymère est un polysaccharide.

6. Utilisation selon la revendication 5, **caractérisée en ce** le biopolymère est de l'amidon ou de la cellulose ou un polymère dérivant de l'amidon ou de la cellulose.

7. Utilisation selon l'une des revendications 5 ou 6, **caractérisée en ce que** les groupements et les groupes anioniques présents résultent de l'oxydation de radicaux dihydroxyéthylène provenant d'unités monosaccharide récurrentes.

8. Utilisation selon la revendication 5 ou 6, **caractérisée en ce que** les groupements et les groupes anioniques présents résultent de l'oxydation de radicaux hydroxyméthyl provenant d'unités monosaccharide récurrentes.

9. Utilisation selon une quelconque des revendication précédentes, **caractérisée en ce que** les groupes anioniques présents résultent d'une carboxy-méthylation.

10. Utilisation selon une quelconque des revendication précédentes, **caractérisée en ce que** le biopolymère contient en outre des groupes cationiques présentant un taux de substitution compris entre 0,01 et 0,50.

**11.** Dérivé de polysaccharide présentant un poids moléculaire d'au moins 800, contenant 0,10 à 2,95 groupements aldéhyde et 0,03 à 1,0 groupes anioniques et 0,01 à 0,50 groupes cationiques par unité récurrente.

**12.** Composition resistant à l'humidité contenant de 10 à 90% d'un dérivé de polysaccharide contenant 0,10 à 2,95 groupements aldéhyde et 0,03 à 1,0 groupes anioniques par unité récurrente et contenant 90 à 10% d'un polymère cationique, les pourcentages étant exprimés par rapport au total de dérivé d'hydrate de carbone et de polymère cationique.

**13.** Fibre cellulosique traitée par un biopolymère tel que define dans l'une quelconque des revendications 1 à 11, ou par un mélange tel que défini dans la revendication 12.

## Fig 1

MACS with varying carboxylic acid content
(10kg/ton; in the presence of 10kg/ton PAE)

EP 1 278 913 B1

Fig 2

MACS together with cationic polymers

*Fig 3*

MACS, MACC
(10 kg/ton; in the presence of 10 kg/ton cationic polymer)

EP 1 278 913 B1

## Fig 4

cationic MACS (A10 with varying cationic content)
(addition level:10kg/ton)

EP 1 278 913 B1

# Fig 5

cationic 6AS
(10 kg/t in the presence of 10 kg/t PAE)

EP 1 278 913 B1

Fig 6